# EUROPÄISCHE PATENTSCHRIFT

(11) **EP 3 111 285 B1**
(45) Veröffentlichungstag und Bekanntmachung des Hinweises auf die Patenterteilung: **12.02.2020**
(21) Anmeldenummer: 14706586.6
(22) Anmeldetag: 25.02.2014
(51) Int. Cl.: A47L 9/28, G05D 1/02

(54) **VERFAHREN ZUM ANDOCKEN EINES BODENBEARBEITUNGSGERÄTES AN EINER BASISSTATION UND BODENBEARBEITUNGSSYSTEM**
METHOD FOR DOCKING A FLOOR TREATMENT DEVICE TO A BASE STATION, AND FLOOR TREATMENT SYSTEM
PROCÉDÉ D'ARRIMAGE D'UN OUTIL DE TRAVAIL DU SOL À UNE STATION DE BASE ET SYSTÈME DE TRAVAIL DU SOL

(43) Veröffentlichungstag der Anmeldung: 04.01.2017
(73) Patentinhaber: Alfred Kärcher SE & Co. KG, 71364 Winnenden (DE)
(72) Erfinder: WENZEL, Karl Engelbert, 73663 Berglen (DE)
(74) Vertreter: Hoeger, Stellrecht & Partner Patentanwälte mbB
(86) Internationale Anmeldenummer: PCT/EP2014/053605
(87) Internationale Veröffentlichungsnummer: WO 2015/127954

(56) Entgegenhaltungen:
- EP-A2- 2 273 336
- DE-A1-102007 036 229
- US-A1- 2007 050 086
- US-A1- 2008 161 969

## Beschreibung

Die Erfindung betrifft ein Verfahren zum Andocken eines selbstfahrenden und selbstlenkenden Bodenbearbeitungsgerätes an einer Basisstation, wobei mit zwei oder mehr Sendeelementen der Basisstation ein jeweiliges, in einem jeweiligen Signalbereich räumlich ausgedehntes Andocksignal ausgesendet wird, wobei die Signalbereiche abschnittsweise überlappen und die Andocksignale unterschiedliche Signalcharakteristik aufweisen, und wobei die Andocksignale von einer Empfangseinrichtung des Bodenbearbeitungsgerätes empfangen und von einer Steuereinheit des Bodenbearbeitungsgerätes analysiert werden.

Außerdem betrifft die Erfindung ein Bodenbearbeitungssystem zur Durchführung des Verfahrens, umfassend eine Basisstation, die eine Sendeeinrichtung mit zwei oder mehr Sendeelementen aufweist, von denen ein jeweiliges, in einem jeweiligen Signalbereich räumlich ausgedehntes Andocksignal aussendbar ist, wobei die Signalbereiche abschnittsweise überlappen und die Andocksignale unterschiedliche Signalcharakteristik aufweisen, sowie umfassend ein selbstfahrendes und selbstlenkendes Bodenbearbeitungsgerät, das eine Empfangseinrichtung zum Empfangen der Andocksignale und eine Steuereinheit zum Analysieren der Andocksignale aufweist.

Ein derartiges Bodenbearbeitungssystem ist beispielsweise als Bodenreinigungssystem ausgestaltet, wobei das Bodenbearbeitungsgerät ein Bodenreinigungsgerät ist, insbesondere ein sogenannter Reinigungsroboter. Das Bodenbearbeitungsgerät weist mindestens ein Bodenbearbeitungsaggregat auf, wobei es sich im Falle eines Bodenreinigungsgerätes beispielsweise um ein Kehraggregat zum Abkehren von Schmutz von der Bodenfläche oder ein Saugaggregat zum Einsaugen von Schmutz in einen Schmutzsammelbehälter handeln kann. Das Bodenbearbeitungsgerät kann die Bodenfläche autonom bearbeiten und zur Wartung und/oder während Arbeitspausen zur Basisstation verfahren.

Die Basisstation kann beispielsweise zum Laden mindestens einer Batterie eines Bodenreinigungsgerätes vorgesehen sein, wobei elektrische Kontaktelemente der Basisstation und des Bodenreinigungsgerätes in dessen Andockstellung koppeln können. In der Andockstellung des Bodenreinigungsgerätes kann eine Absaugöffnung der Basisstation mit einer Schmutzaustrittsöffnung des Bodenreinigungsgerätes fluchten, damit Schmutz von der Basisstation aus dem Bodenreinigungsgerät abgesaugt werden kann. Möglich ist auch, dass einem Bodenbearbeitungsgerät von der Basisstation ein Betriebsstoff zugeführt wird, beispielsweise Wasser zum Befeuchten der Bodenfläche.

Damit das Bodenbearbeitungsgerät in die Andockstellung verfahren kann, muss die Basisstation vom Bodenbearbeitungsgerät lokalisiert und angefahren werden können. Bekannt ist es hierbei, dass im Bodenbearbeitungsgerät eine Karte des zu bearbeitenden Raumes gespeichert ist, in der die Position der Basisstation hinterlegt ist. Anhand von Landmarken im Raum, die mit Merkmalen in der Karte verknüpft sind, kann das Bodenbearbeitungsgerät seine Position innerhalb der Karte lokalisieren und dadurch die Fahrstrecke zur Basisstation berechnen. Dies erfordert allerdings einen beträchtlichen apparativen Aufwand und erweist sich in der Praxis häufig als unzuverlässig, so dass über die Kartennavigation hinaus am Bodenbearbeitungsgerät zusätzliche Sensorik zum Erkennen der Basisstation erforderlich ist.

Die EP 2 065 774 A1 beschreibt ein gattungsgemäßes Bodenbearbeitungssystem zum Durchführen eines gattungsgemäßen Verfahrens. Dabei kommt eine Basisstation zum Einsatz mit zwei Sendeelementen, die Andocksignale in einem jeweiligen fächerförmigen Signalbereich emittieren. Die Signalbereiche, die von den Sendeelementen erfasst werden, überlappen bereichsweise. Das Bodenbearbeitungsgerät kann die Andocksignale voneinander unterscheiden. Je nachdem, an welcher Position eines Signalbereichs sich das Bodenbearbeitungsgerät befindet oder wie es in diesen Signalbereich hineinfährt, verfolgt das Bodenbearbeitungsgerät eine unterschiedliche Strategie, um in die Andockstellung an der Basisstation zu verfahren. Beispielsweise fährt das Bodenbearbeitungsgerät entlang einer Grenze eines Signalbereiches, wodurch es sich erst umständlicherweise von der Basisstation wegbewegen und anschließend wieder auf diese zubewegen kann. Bei einer andersartigen Fahrstrategie fährt das Bodenbearbeitungsgerät bogenförmig innerhalb eines Signalbereiches, was dazu führen kann, dass es sich im Kreis bewegt, ohne sich der Basisstation anzunähern. Bei wiederum einer anderen Fahrstrategie umfährt das Bodenbearbeitungsgerät die Basisstation, bewegt sich von diesem weg, wendet und fährt erst anschließend auf die Basisstation zu. Insgesamt besteht bei den in der EP 2 065 774 A1 beschriebenen Verfahren die Gefahr, dass das Bodenbearbeitungsgerät größere Wegstrecken unnötigerweise verfährt und dadurch das Andocken verzögert. Bei den zahlreichen unterschiedlichen Strategien besteht ferner das Risiko für die Steuereinheit, eine falsche Fahrstrategie zu wählen und dadurch das Andocken an der Basisstation unnötigerweise zu verzögern.

Die US 2007/0050086 A1 beschreibt ein System und ein Verfahren zur Rücckehr eines autonomen Bodenbearbeitungsgerätes zu einer Ladestation.

Ein Verfahren und ein System zum Heranführen eines mobilen Gerätes an ein stationäres Gerät ist in der DE 10 2007 036 229 A1 beschrieben. Das mobile Gerät ist beispielsweise ein Reinigungsroboter und das stationäre Gerät eine Ladestation.

Aufgabe der vorliegenden Erfindung ist es, ein gattungsgemäßes Verfahren und ein gattungsgemäßes Bodenbearbeitungssystem bereitzustellen, die jeweils ein einfaches und zuverlässiges Andocken des Bodenbearbeitungsgerätes an der Basisstation ermöglichen.

Diese Aufgabe wird bei einem Verfahren der eingangs genannten Art erfindungsgemäß dadurch gelöst, dass mit der Steuereinheit die Ist-Position des Bodenbearbeitungsgerätes relativ zur Basisstation unter Einbeziehung der unterschiedlichen Signalcharakteristik berechnet wird, ein Fahrweg des Bodenbearbeitungsgerätes von der Ist-Position zu einem charakteristischen Zielbereich in vorgegebener oder vorgebbarer Relativposition zur Basisstation ermittelt und das Bodenbearbeitungsgerät zu dem charakteristischen Zielbereich verfahren wird, ausgehend von dem das Bodenbearbeitungsgerät in eine Andockstellung an der Basisstation verfahren wird.

Beim erfindungsgemäßen Verfahren kann die unterschiedliche Signalcharakteristik der zwei oder mehr Andocksignale herangezogen werden, damit die Steuereinheit Signalbeiträge der Sendeelemente voneinander unterscheiden kann. Beispielsweise kann ein Andocksignal umso stärker empfangen werden, je näher das Bodenbearbeitungsgerät dem entsprechenden Sendeelement ist und umso schwächer, je weiter das Bodenbearbeitungsgerät vom entsprechenden Sendeelement entfernt ist. Anhand der Analyse der als unterschiedlich erkennbaren Andocksignale sowie erforderlichenfalls auch des Gesamtsignals, das sich aus zwei oder mehr Andocksignalen zusammensetzt, kann die Steuereinheit die Ist-Position des Bodenbearbeitungsgerätes relativ zur Basisstation berechnen. Bevorzugt stoppt das Bodenbearbeitungsgerät, wenn zumindest zwei Andocksignale empfangen werden, um eine möglichst genaue Positionsbestimmung vorzunehmen. Ist die Ist-Position bekannt, ermittelt die Steuereinheit einen Fahrweg zu dem charakteristischen Zielbereich. Das Bodenbearbeitungsgerät kann anschließend über den Fahrweg an den Zielbereich verfahren werden. Der Zielbereich kann dabei als räumlich eng beschränkter Bereich angesehen werden, im Sinne eines Punktes. Es kann insbesondere auch vorgesehen sein, dass der Zielbereich eine räumliche Ausdehnung aufweist. Beispielsweise kann der Zielbereich kreisförmig sein, zum Beispiel mit einem Radius von ungefähr 2 cm bis 15 cm, vorzugsweise ungefähr 5 cm bis 10 cm. Die Größe des Zielbereiches wird bevorzugt so gewählt, dass die Andockstellung ausgehend vom Zielbereich zuverlässig angefahren werden kann. Besonders bevorzugt wird die Fahrtrichtung beim Verfahren in die Andockstellung abhängig von zumindest zwei Andocksignalen geregelt.

Das erfindungsgemäße Verfahren bietet den Vorteil, dass überflüssiges Verfahren des Bodenbearbeitungsgerätes vermieden werden kann. Es kommt eine teilgeplante Fahrstrategie zum Einsatz, die das möglichst genaue Lokalisieren des Bodenbearbeitungsgerätes und das gezielte Anfahren des Zielbereiches umfasst, ausgehend von dem die Andockstellung angefahren wird. Die hierfür erforderliche Empfangseinrichtung des Bodenbearbeitungsgerätes und Sendeeinrichtung der Basisstation können konstruktiv einfach ausgestaltet sein. Dies erlaubt eine kostengünstige Herstellung des Bodenbearbeitungsgerätes und der Basisstation. Der von der Steuereinheit zu erbringende Rechenaufwand kann gering gehalten werden.

Als Sendeelemente werden beispielsweise Leuchtdioden verwendet, insbesondere Infrarot-Dioden. Jede Leuchtdiode emittiert beispielsweise Licht in einem kegelförmigen Signalbereich, wobei die Signalbereiche von zumindest zwei Leuchtdioden abschnittsweise überlappen.

Als andersartige Sendeelemente können beispielsweise Ultraschallsender zum Einsatz kommen.

Aufgrund unterschiedlicher Signalcharakteristik können die Andocksignale voneinander unterschieden werden. Beispielsweise unterscheiden sich die Andocksignale in der verwendeten Wellenlänge und/oder sie werden in unterschiedlicher zeitlicher Modulation gesendet. Unabhängig von der verwendeten Wellenlänge können die Andocksignale zum Beispiel unterschiedlich gepulst ausgesandt werden. Die Steuereinheit kann anhand der empfangenen Pulsfolgen feststellen, welches Andocksignal empfangen wurde.

Der Einsatz gepulster Andocksignale erlaubt es auch auf einfache Weise Hintergrundsignale zu erkennen und zur Verbesserung des Signal-Rausch-Verhältnisses vom Gesamtsignal zu trennen. Bei der Verwendung von Infrarotstrahlung für die Andocksignale kommen als Hintergrundstrahlung insbesondere Sonnenlicht in Betracht oder andere Infrarotquellen wie etwa Fernbedienungen.

Günstig ist es, wenn zur Bestimmung der Ist-Position des Bodenbearbeitungsgerätes relativ zur Basisstation der Abstand bestimmt wird, den das Bodenbearbeitungsgerät zur Basisstation aufweist, sowie der Winkel, den das Bodenbearbeitungsgerät zur Basisstation einnimmt. Der Winkel ist insbesondere zwischen einer gedachten Verbindungslinie der Basisstation mit dem Bodenbearbeitungsgerät und einer Achse der Basisstation gemessen, längs der das Bodenbearbeitungsgerät in definierter Andockrichtung in die Andockstellung verfahrbar ist. Unter "Andockrichtung" kann vorliegend insbesondere verstanden werden, dass bei Verfahren des Bodenbearbeitungsgerätes in geradliniger Geradeausfahrt längs der Andockrichtung das Andocken ermöglicht wird. Vorzugsweise ist vorgesehen, dass das Bodenbearbeitungsgerät ausgehend vom Zielbereich idealerweise geradlinig in definierter Andockrichtung in die Andockstellung zu verfahren ist, beispielsweise damit zusammenwirkende elektrische Kontaktelemente der Basisstation und des Bodenbearbeitungsgerätes miteinander koppeln können oder eine Ansaugöffnung der Basisstation mit einer Schmutzaustrittsöffnung des Bodenbearbeitungsgerätes fluchten kann.

Richtungsangaben wie beispielsweise "Geradeausfahrt", "Vorwärts" oder "Rückwärts" sind vorliegend auf eine Längs- oder Hauptbewegungsrichtung des Bodenbearbeitungsgerätes bezogen aufzufassen, entlang der sich das Bodenbearbeitungsgerät üblicherweise bewegt.

Von Vorteil ist es, wenn das Bodenbearbeitungsgerät vor der Bestimmung der Ist-Position an dieser relativ zur Basisstation gedreht wird, bis die Signalstärke des Gesamtsignals aus den zwei oder mehr Andocksignalen maximal ist. Empfängt das Bodenbearbeitungsgerät Andocksignale, wird es bevorzugt an Ort und Stelle relativ zur Basisstation unter Drehung ausgerichtet, indem die Signalstärke des empfangenen Gesamtsignals maximal ist. Dies erweist sich in der Praxis als vorteilhaft für die Genauigkeit der Berechnung des Winkels und des Abstandes zur Basisstation. Ferner erlaubt dies zum Beispiel, eine omnidirektionale Empfangseinrichtung am Bodenbearbeitungsgerät einzusparen und mit einer relativ preisgünstigen gerichteten Empfangseinrichtung am Bodenbearbeitungsgerät auszukommen.

"Signalstärke" wird vorliegend als Maß für die Stärke eines von der Empfangseinrichtung empfangenen Andocksignals angesehen oder eines Gesamtsignals, das sich aus zwei oder mehr Andocksignalen zusammensetzt. Die Signalstärke kann vorliegend in physikalischen Einheiten angebbar sein (beispielsweise SI-Einheiten), es kann sich insbesondere auch um eine Signalstärke in willkürlichen Einheiten der Empfangseinrichtung handeln, beispielsweise die Zählrate pro Sekunde eines Fotodetektors oder der Spannungswert eines der Empfangseinrichtung nachgeschalteten Analog-Digital-Konverters.

Günstig ist es, wenn die Steuereinheit überprüft, ob die Genauigkeit, mit der der Winkel bestimmbar ist, außerhalb eines vorgegebenen oder vorgebbaren Toleranzbereiches liegt, dass bejahendenfalls das Bodenbearbeitungsgerät so bewegt wird, dass die Signalstärke zumindest eines Andocksignals so erhöht ist, dass eine Genauigkeit der Bestimmung des Winkels innerhalb des Toleranzbereiches möglich ist, bevor die Ist-Position bestimmt wird. Dies erlaubt eine genauere Positionsbestimmung. Stellt das Bodenbearbeitungsgerät fest, dass die zur erwartende Genauigkeit für die Bestimmung des Winkels zu gering ist, kann das Bodenbearbeitungsgerät auf der Bodenfläche verfahren und kontrollieren, ob die Signalstärke zumindest eines Andocksignals anwächst. Dieser Vorgang kann auch wiederholt durchgeführt werden. Ist die erwartete Genauigkeit für die Bestimmung des Winkels groß genug, kann die Ist-Position des Bodenbearbeitungsgerätes bestimmt werden.

Als vorteilhaft erweist es sich, wenn der Winkel des Bodenbearbeitungsgerätes zur Basisstation ermittelt wird, indem das Verhältnis der Signalstärken von zwei oder mehr Andocksignalen miteinander und/oder das Verhältnis der Signalstärke eines Andocksignals zur Signalstärke des Gesamtsignals aus den zwei oder mehr Andocksignalen berechnet und von der Steuereinheit anhand einer gespeicherten Verhältnis-Winkel-Beziehung ermittelt wird. Das berechnete Verhältnis kann unter Berücksichtigung der Verhältnis-Winkel-Beziehung zur Ermittlung des Winkels herangezogen werden. Die Verhältnis-Winkel-Beziehung ist beispielsweise eine in der Steuereinheit gespeicherte Kalibrierkurve oder Kalibrierfunktion.

Günstig ist es, wenn der Abstand des Bodenbearbeitungsgerätes zur Basisstation ermittelt wird, indem die Signalstärke zumindest eines Andocksignals und/oder die Signalstärke des Gesamtsignals aus den zwei oder mehr Andocksignalen durch Vergleich mit einer gespeicherten Signalstärke-Abstands-Beziehung ermittelt wird. Die Signalstärke-Abstands-Beziehung ist beispielsweise eine in der Steuereinheit gespeicherte Kalibrierfunktion oder Kalibrierkurve, anhand derer durch Vergleich mit der ermittelten Signalstärke der Abstand berechnet werden kann.

Hierbei wird vorzugsweise berücksichtigt, dass die Signalstärke eines Andocksignals im jeweiligen Signalbereich abhängig von der Winkelstellung ist, die das Bodenbearbeitungsgerät relativ zum Sendeelement einnimmt. Vorzugsweise wird der vom Bodenbearbeitungsgerät zur Basisstation eingenommene Winkel herangezogen, um mit einer Signalstärken-Winkelstellung-Beziehung eine kompensierte Signalstärke zu berechnen, die dem Vergleich mit der Signalstärke-Abstands-Beziehung zugrundegelegt wird. Die Signalstärken-Winkelstellung-Beziehung berücksichtigt die Abstrahlungscharakteristik eines Sendeelementes, bei der die Signalstärke des Andocksignals innerhalb des Signalbereiches unterschiedlich groß ist. Anhand einer entsprechenden Kalibrierfunktion oder Kalibrierkurve, die in der Steuereinheit gespeichert sein kann, kann eine kompensierte Signalstärke berechnet werden, anhand derer über die Signalstärke-Abstands-Beziehung der Abstand des Bodenbearbeitungsgerätes zur Basisstation berechnet wird.

Es kann vorgesehen sein, dass das Bodenbearbeitungsgerät von der Ist-Position zum Zielbereich geradlinig verfährt, wobei es erforderlichenfalls vorzugsweise so gedreht wird, dass die Längsrichtung mit einer Verbindungslinie der Ist-Position mit dem Zielbereich fluchtet, wobei die Drehung vorzugsweise um den kleineren der beiden Winkel zwischen der Längsrichtung und der Verbindungslinie erfolgt. Dementsprechend kann vorgesehen sein, dass das Bodenbearbeitungsgerät in geradliniger Geradeausfahrt oder in geradliniger Rückwärtsfahrt von der Ist-Position zum Zielbereich verfahren wird, je nachdem, wie die Längsrichtung des Bodenbearbeitungsgerätes schneller mit der Verbindungslinie in Flucht gebracht werden kann.

Am Zielbereich wird das Bodenbearbeitungsgerät vorzugsweise zur Basisstation ausgerichtet.

"Ausrichten" des Bodenbearbeitungsgerätes kann vorliegend insbesondere derart verstanden werden, dass Bodenbearbeitungsgerät an Ort und Stelle so gedreht wird, dass seine Längsrichtung in Richtung des Zieles weist, beispielsweise des charakteristischen Zielbereiches oder der Basisstation.

Bevorzugt wird die Fahrtrichtung des Bodenbearbeitungsgerätes vom Zielbereich in die Andockstellung abhängig von den Signalstärken der Andocksignale geregelt. Beispielsweise wird die Fahrtrichtung abhängig von einem Verhältnis der Signalstärken der Andocksignale zueinander und/oder der Signalstärke eines Andocksignals zum Gesamtsignal geregelt. Im Bodenbearbeitungsgerät kann gespeichert sein, dass die Basisstation ausgehend vom Zielbereich korrekt angefahren wird, wenn die Signalstärken oder deren Verhältnis einen vorgegebenen Wert aufweisen. Durch Vergleich der gemessenen Werte der Signalstärken mit den gespeicherten Werten kann von der Steuereinheit festgestellt werden, ob die Fahrtrichtung korrekt ist. Bei einer Abweichung kann eine Fahrtrichtungskorrektur vorgenommen werden. Idealerweise verfährt das Bodenbearbeitungsgerät ausgehend vom Zielbereich in geradliniger Geradeausfahrt in die Andockstellung, ohne dass eine Fahrtrichtungskorrektur vorgenommen werden muss. Beim Verfahren vom Zielbereich in die Andockstellung erfolgt eine Regelung vorzugsweise zyklisch. Beispielsweise werden die Andocksignale von der Steuereinheit im Sekunden- oder Millisekundentakt ausgewertet.

Das zuletzt erwähnte vorteilhafte Ausführungsbeispiel des Verfahrens wird vorzugsweise auch durchgeführt, wenn festgestellt wird, dass die Ist-Position am Zielbereich liegt, in welchem Fall direkt von der Ist-Position die Andockstellung verfahren wird. Abweichend von den bislang durchgeführten Verfahren kann, wenn die Ist-Position mit dem Zielbereich übereinstimmt oder näherungsweise übereinstimmt, direkt von der Ist-Position unter Regelung der Fahrtrichtung in die Andockstellung verfahren werden. Eine Berechnung des Fahrweges von der Ist-Position zum Zielbereich kann eingespart werden.

Wie bereits erwähnt ist es günstig, wenn der Zielbereich so relativ zur Basisstation positioniert ist, dass das Bodenbearbeitungsgerät ausgehend vom Zielbereich in geradliniger Geradeausfahrt in die Andockstellung verfahrbar ist.

Idealerweise verfährt das Bodenbearbeitungsgerät geradlinig längs definierter Andockrichtung in die Andockstellung.

Selbstverständlich kann vorgesehen sein, dass am Zielbereich zur Positionskontrolle abermals die Ist-Position des Bodenbearbeitungsgerätes relativ zur Basisstation ermittelt wird. Dies erfolgt beispielsweise unter Ermittlung des Winkels und des Abstandes, wie dies bereits erläutert wurde.

Günstig ist es, wenn der Zielbereich auf einer von der Basisstation definierten Achse liegt und wenn die Andockrichtung längs der Achse verläuft. Die Achse ist insbesondere senkrecht zu einer von der Basisstation definierten Andockebene ausgerichtet und in einer Ebene enthalten, die senkrecht zur Andockebene ausgerichtet ist und senkrecht zu einer Berührebene der Basisstation mit der Bodenfläche. In der Andockebene sind beispielsweise elektrische Kontaktelemente der Basisstation angeordnet, die mit Kontaktelementen des Bodenbearbeitungsgerätes zusammenwirken können.

Die Achse kann entsprechend der vorstehenden Definition des Winkels zwischen dem Bodenbearbeitungsgerät und der Basisstation einer 0°-Stellung des Bodenbearbeitungsgerätes entsprechen. Längs der Achse bewegt sich das Bodenbearbeitungsgerät bevorzugt in geradliniger Geradeausfahrt in die Andockstellung.

Bevorzugt wird unabhängig von der Ist-Position des Bodenbearbeitungsgerätes derselbe Zielbereich gewählt und angefahren. Herstellerseitig kann beispielsweise sichergestellt werden, dass die Andockstellung ausgehend vom Zielbereich zuverlässig erreicht werden kann.

Vorzugsweise sind die zwei oder mehr Sendeelemente und die von ihnen erfassten Signalbereiche bezüglich der Achse bzw. der vorstehend erwähnten Ebene symmetrisch zueinander an der Basisstation positioniert bzw. ausgerichtet. Dadurch kann sichergestellt werden, dass bei einer Bewegung längs der Achse Andocksignale von zwei oder mehr Sendeelementen empfangen werden können, die zur Regelung der Fahrtrichtung des Bodenbearbeitungsgerätes in die Andockstellung herangezogen werden können.

Die Andocksignale der zwei oder mehr Sendeelemente sind vorzugsweise gleich stark oder im Wesentlichen gleich stark.

Beispielsweise ist es günstig, wenn die von zumindest zwei Sendeelementen erfassten Signalbereiche die Achse bzw. die vorstehend erwähnte Ebene schneiden. Bei Abweichungen von der Achse kann das Bodenbearbeitungsgerät Änderungen der Andocksignale der zwei oder mehr Sendeelementen erfassen und erforderlichenfalls Korrekturen der Fahrtrichtung durchführen.

Es kann vorgesehen sein, dass das Bodenbearbeitungsgerät eine Navigation anhand einer Karte der zu bearbeitenden Bodenfläche durchführt, bis ein Andocksignal empfangen wird. Empfängt das Bodenbearbeitungsgerät ein Andocksignal, kann auf eine der vorstehend erwähnten Verfahren die Andockstellung angefahren werden.

Als Bodenbearbeitungsgerät kann beispielsweise ein Bodenreinigungsgerät verwendet werden, zum Beispiel ein Saugroboter oder ein Kehr-Saug-Roboter.

Als Basisstation kann eine Ladestation verwendet werden, mit der mindestens eine Batterie des Bodenbearbeitungsgerätes geladen werden kann. Ergänzend oder alternativ kann als Basisstation eine Absaugstation verwendet werden, über die Schmutz aus einem Schmutzsammelbehälter des Bodenbearbeitungsgerätes abgesaugt werden kann. Ergänzend oder alternativ kann die Basisstation eine Nachfüllstation sein, mit der ein Betriebsstoff am Bodenbearbeitungsgerät aufgefüllt werden kann, beispielsweise Wasser zum Befeuchten der Bodenfläche.

Die eingangs gestellte Aufgabe wird bei einem gattungsgemäßen Bodenbearbeitungssystem erfindungsgemäß dadurch gelöst, dass mit der Steuereinheit die Ist-Position des Bodenbearbeitungsgerätes relativ zur Basisstation unter Einbeziehung der unterschiedlichen Signalcharakteristik berechenbar ist, ein Fahrweg des Bodenbearbeitungsgerätes von der Ist-Position des Bodenbearbeitungsgerätes zu einem charakteristischen Zielbereich in vorgegebener oder vorgebbarer Relativposition zur Basisstation ermittelbar und das Bodenbearbeitungsgerät zu dem charakteristischen Zielbereich verfahrbar ist, ausgehend von dem das Bodenbearbeitungsgerät in eine Andockstellung an der Basisstation verfahrbar ist.

Die bereits im Zusammenhang mit der Erläuterung des erfindungsgemäßen Verfahrens erwähnten Vorteile können unter Einsatz des Bodenbearbeitungssystems ebenfalls erzielt werden. Zur Vermeidung von Wiederholungen wird auf voranstehende Erläuterungen verwiesen.

In entsprechender Weise können mit vorteilhaften Ausführungsformen des erfindungsgemäßen Bodenbearbeitungssystems die Vorteile erzielt werden, die bereits vorstehend im Zusammenhang mit der Erläuterung vorteilhafter Ausführungsbeispiele des erfindungsgemäßen Verfahrens erwähnt wurden.

Die Sendeelemente sind vorzugsweise Leuchtdioden, insbesondere Infrarot-Dioden.

Beispielsweise kommen identische Leuchtdioden zum Einsatz, die unterschiedlich pulsiert betrieben werden, so dass die emittierten Andocksignale eine unterschiedliche zeitliche Modulation aufweisen.

Die Leuchtdioden emittieren beispielsweise Lichtkegel mit einer Halbwertsbreite (Halbstreuwinkel) von ungefähr 30° bis ungefähr 40°.

Günstigerweise unterscheiden sich die Andocksignale in der verwendeten Wellenlänge und/oder sie sind in unterschiedlicher zeitlicher Modulation aussendbar.

Als vorteilhaft erweist es sich, wenn zur Bestimmung der Ist-Position des Bodenbearbeitungsgerätes relativ zur Basisstation der Abstand bestimmbar ist, den das Bodenbearbeitungsgerät zur Basisstation aufweist, sowie der Winkel, den das Bodenbearbeitungsgerät zur Basisstation einnimmt. Der Winkel ist insbesondere zwischen einer gedachten Verbindungslinie der Basisstation mit dem Bodenbearbeitungsgerät und einer Achse der Basisstation gemessen, längs der das Bodenbearbeitungsgerät in definierter Andockrichtung in die Andockstellung verfahrbar ist.

Von Vorteil ist es, wenn das Bodenbearbeitungsgerät vor der Bestimmung der Ist-Position an dieser relativ zur Basisstation so drehbar ist, dass die Signalstärke des Gesamtsignals aus den zwei oder mehr Andocksignalen maximal ist.

Günstig ist es, wenn mit der Steuereinheit überprüfbar ist, ob die Genauigkeit, mit der der Winkel bestimmbar ist, außerhalb eines vorgegebenen oder vorgebbaren Toleranzbereiches liegt, wenn bejahendenfalls das Bodenbearbeitungsgerät so bewegbar ist, dass die Signalstärke zumindest eines Andocksignals so erhöht ist, dass eine Genauigkeit der Bestimmung des Winkels innerhalb des Toleranzbereiches möglich ist, bevor die Ist-Position bestimmt wird.

Vorzugsweise ist der Winkel des Bodenbearbeitungsgerätes zur Basisstation ermittelbar, indem das Verhältnis der Signalstärken von zwei oder mehr Andocksignalen miteinander und/oder das Verhältnis der Signalstärke eines Andocksignals zur Signalstärke des Gesamtsignals aus den zwei oder mehr Andocksignalen berechnet und von der Steuereinheit anhand einer gespeicherten Verhältnis-Winkel-Beziehung ermittelt wird.

Der Abstand des Bodenbearbeitungsgerätes zur Basisstation ist günstigerweise ermittelbar, indem die Signalstärke zumindest eines Andocksignals und/oder die Signalstärke des Gesamtsignals aus den zwei oder mehr Andocksignalen durch Vergleich mit einer gespeicherten Signalstärke-Abstands-Beziehung ermittelt wird.

Von Vorteil ist es, wenn hierbei berücksichtigbar ist, dass die Signalstärke eines Andocksignals im jeweiligen Signalbereich abhängig von der Winkelstellung ist, die das Bodenbearbeitungsgerät relativ zum Sendeelement einnimmt, und wenn der vom Bodenbearbeitungsgerät zur Basisstation eingenommene Winkel herangezogen wird, mit einer Signalstärken-Winkelstellung-Beziehung eine kompensierte Signalstärke zu berechnen, die dem Vergleich mit der Signalstärke-Abstands-Beziehung zugrundegelegt wird.

Es kann vorgesehen sein, dass das Bodenbearbeitungsgerät von der Ist-Position zum Zielbereich geradlinig verfährt, wobei es erforderlichenfalls vorzugsweise zuvor so gedreht wird, dass die Längsrichtung mit einer Verbindungslinie der Ist-Position mit dem Zielbereich fluchtet, wobei die Drehung bevorzugt um den kleineren der beiden Winkel zwischen der Längsrichtung und der Verbindungslinie erfolgt.

Am Zielbereich ist das Bodenbearbeitungsgerät vorzugsweise relativ zur Basisstation ausrichtbar. Beispielsweise ist das Bodenbearbeitungsgerät so drehbar, dass die Signalstärke des Gesamtsignals aus den zwei oder mehr Andocksignalen maximal ist.

Günstigerweise ist die Position des Bodenbearbeitungsgerätes am Zielbereich relativ zur Basisstation kontrollierbar, beispielsweise durch Ermittlung des Winkels und des Abstandes des Bodenbearbeitungsgerätes relativ zur Basisstation.

Vorteilhafterweise ist die Fahrtrichtung des Bodenbearbeitungsgerätes vom Zielbereich in die Andockstellung abhängig von den Signalstärken der Andocksignale regelbar.

Von Vorteil ist es, wenn dies auch durchführbar ist, wenn die Ist-Position am Zielbereich liegt, in welchem Fall direkt von der Ist-Position in die Andockstellung verfahrbar ist. Die Ermittlung des Fahrweges von der Ist-Position zum Zielbereich sowie das Verfahren zum Zielbereich kann eingespart werden.

Vorteilhafterweise ist der Zielbereich so relativ zur Basisstation positioniert, dass das Bodenbearbeitungsgerät ausgehend vom Zielbereich in geradliniger Geradeausfahrt in die Andockstellung verfahrbar ist.

Günstigerweise liegt der Zielbereich auf einer von der Basisstation definierten Achse, und die Andockrichtung verläuft vorzugsweise längs der Achse.

Bevorzugt ist unabhängig von der Ist-Position des Bodenbearbeitungsgerätes derselbe Zielbereich wählbar und anfahrbar.

Die zwei oder mehr Sendeelemente und die von ihnen erfassten Signalbereiche sind günstigerweise bezüglich der Achse bzw. der vorstehend erwähnten Ebene symmetrisch zueinander an der Basisstation positioniert bzw. ausgerichtet.

Es kann vorgesehen sein, dass die von zumindest zwei Sendeelementen erfassten Signalbereiche die Achse bzw. die vorstehend erwähnte Ebene schneiden.

Das Bodenbearbeitungsgerät ist bei einer vorteilhaften Ausführungsform des Bodenbearbeitungssystems ein Bodenreinigungsgerät.

Als vorteilhaft erweist es sich, wenn die Basisstation eine Ladestation und/oder Absaugstation und/oder Nachfüllstation ist.

Die nachfolgende Beschreibung vorteilhafter Ausführungsformen der Erfindung dient im Zusammenhang mit der Zeichnung der näheren Erläuterung der Erfindung. Es zeigen:
- Figur 1:: eine perspektivische Darstellung eines erfindungsgemäßen Bodenbearbeitungssystems, ausgestaltet als Bodenreinigungssystem mit einer Basisstation und einem Bodenbearbeitungsgerät in Gestalt eines Bodenreinigungsgerätes;

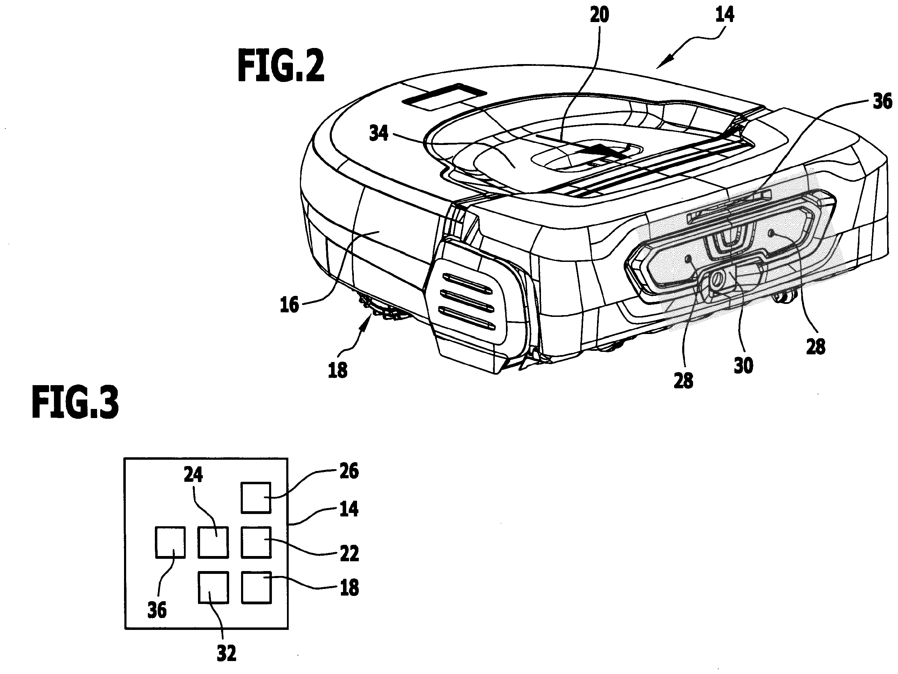

- Figur 2:: eine perspektivische Darstellung des Bodenreinigungsgerätes aus Figur 1;
- Figur 3:: ein schematisches, vereinfachtes Blockschaltbild des Bodenreinigungsgerätes aus Figur 1;
- Figur 4:: eine schematische Darstellung des Bodenreinigungssystems aus Figur 1 zur Erläuterung des Andockens des Bodenreinigungsgerätes an der Basisstation und
- Figur 5:: eine perspektivische Darstellung einer zweiten bevorzugten Ausführungsform eines Bodenbearbeitungssystems, ausgestaltet als Bodenreinigungssystem.

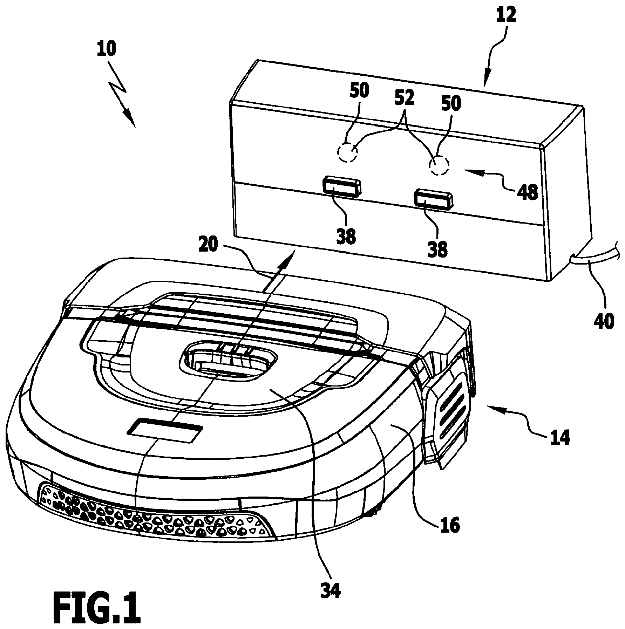

Figur 1 zeigt in perspektivischer Darstellung eine erste bevorzugte Ausführungsform eines erfindungsgemäßen Bodenbearbeitungssystems zur Durchführung des erfindungsgemäßen Verfahrens. Das Bodenbearbeitungssystem ist ausgestaltet als Bodenreinigungssystem 10 und umfasst eine Basisstation 12 sowie ein Bodenbearbeitungsgerät, ausgestaltet als Bodenreinigungsgerät 14. Das Bodenreinigungsgerät 14 ist selbstfahrend und selbstlenkend ausgestaltet und ermöglicht die autonome Reinigung einer Bodenfläche.

Das Bodenreinigungsgerät 14 umfasst ein Gehäuse 16 mit einem daran gehaltenen Fahrwerk 18, um auf der Bodenfläche verfahren zu können. Üblicherweise bewegt sich das Bodenreinigungsgerät 14 entlang einer seiner Längsrichtung 20, so dass die Hauptbewegungsrichtung in Längsrichtung 20 verläuft. Das Fahrwerk 18 wird angetrieben von einem Motor 22, der von einer Steuereinheit 24 angesteuert wird. Energie für das Fahrwerk 18 wird von mindestens einer wiederaufladbaren Batterie 26 bereitgestellt.

Die Batterie 26 ist in elektrischem Kontakt mit zwei Kontaktelementen 28, die in Längsrichtung 20 an einer Vorderseite 30 des Bodenreinigungsgerätes 14 angeordnet sind. Durch Beaufschlagen der Kontaktelemente 28 mit elektrischer Energie kann die Batterie 26 geladen werden.

Zur Reinigung der Bodenfläche umfasst das Bodenreinigungsgerät 14 mindestens ein Reinigungsaggregat 32. Vorliegend sind als Reinigungsaggregate 32 eine quer zur Längsrichtung 20 rotierbare Kehrbürste vorhanden (nicht gezeigt), um Schmutz von der Bodenfläche zu kehren. Die Reinigungsaggregate 32 umfassen ferner ein nicht gezeigtes Saugaggregat, um Schmutz von der Bodenfläche in einen Schmutzsammelbehälter 34 einzusaugen.

Das Bodenreinigungsgerät 14 umfasst ferner eine mit der Steuereinheit 24 gekoppelte Empfangseinrichtung 36. Die Empfangseinrichtung 36 ist an der Vorderseite 30 angeordnet. Beispielsweise ist die Empfangseinrichtung 36 oberhalb der Kontaktelemente 28 positioniert und insbesondere an einer Mittellängsebene des Bodenreinigungsgerätes 14.

Mit der Empfangseinrichtung 36 kann elektromagnetische Strahlung, insbesondere Infrarotstrahlung, erfasst werden. Von der Basisstation 12 ausgesandte Andocksignale (darauf wird nachfolgend eingegangen) können von der Empfangseinrichtung 36 empfangen und von der Steuereinheit 24 analysiert werden. Anhand der Ergebnisse der Analysen kann die Steuereinheit 24 den Motor 22 zum Verfahren des Bodenreinigungsgerätes 14 insbesondere derart ansteuern, dass es in eine Andockstellung an der Basisstation 12 verfahren wird.

Die Basisstation 12 ist vorliegend eine Ladestation zum Laden der mindestens einen Batterie 26. Zu diesem Zweck weist die Basisstation 12 stirnseitig zwei elektrische Kontaktelemente 38 auf, die mit den Kontaktelementen 28 koppeln können. Die Kontaktelemente 38 sind mit elektrischer Energie beaufschlagt, wobei die Basisstation 12 beispielsweise über ein Anschlusskabel 40 an ein Energieversorgungsnetz angeschlossen ist.

Die Basisstation 12 definiert eine Achse 42. Die Achse 42 ist senkrecht zu einer von der Basisstation 12 definierten Andockebene 44 ausgerichtet. Die Andockebene 44 wird definiert durch die Lage der Kontaktelemente 38. Das Bodenreinigungsgerät 14 wird vorzugsweise gemäß einer Andockrichtung 46 in eine Andockstellung an der Basisstation 12 verfahren. Die Andockrichtung 46 verläuft längs der Achse 42 und ist auf die Basisstation 12 gerichtet. In der Andockstellung des Bodenreinigungsgerätes 14 koppeln die Kontaktelemente 28 mit den Kontaktelementen 38, damit die Batterie 26 geladen werden kann.

Damit das Bodenreinigungsgerät 14 bei konstruktiv einfacher Ausgestaltung zuverlässig in die Andockstellung verfahren werden kann, umfasst die Basisstation 12 eine Sendeeinrichtung 48 mit einer Mehrzahl von Sendelementen 50. Vorliegend sind zwei Sendeelemente 50 in Gestalt von Leuchtdioden vorhanden, nämlich IR-Dioden 52. Es könnten mehr Sendeelemente 50 vorhanden, und die Sendeelemente sind bevorzugt identisch ausgestaltet. Die IR-Dioden 52 sind symmetrisch zueinander bezüglich der Achse 42 an der Basisstation 12 angeordnet. Darunter wird vorliegend insbesondere verstanden, dass die IR-Dioden 52 symmetrisch bezüglich einer die Achse 42 enthaltenden Ebene angeordnet sind, welche Ebene (insbesondere eine Mittelebene der Basisstation 12) senkrecht zur Andockebene und zur Berührebene der Basisstation 12 mit der Bodenfläche ausgerichtet ist.

Die IR-Dioden 52 sind oberhalb der Kontaktelemente 38 positioniert und in einem Abstand zur Bodenfläche, der gleich oder im Wesentlichen gleich dem Abstand der Empfangseinrichtung 36 zur Bodenfläche ist.

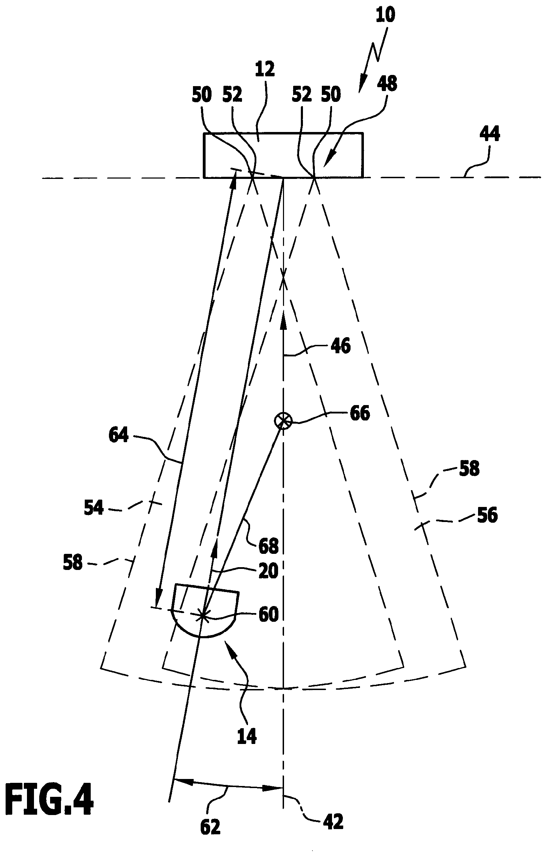

Die IR-Dioden 52 emittieren die bereits erwähnten Andocksignale. Die Andocksignale sind vorzugsweise gleich stark und werden in von den IR-Dioden 52 erfassten Signalbereichen 54, 56 emittiert. Die Signalbereiche 54, 56 sind kegelförmig mit einer Halbwertsbreite von ungefähr 10° bis ungefähr 20°, beispielsweise ungefähr 17°. Eine entsprechende jeweilige Grenze 58 in Figur 4 symbolisiert die Halbwertsbreite der Signalbereiche 54, 56. Die IR-Dioden 52 sind so an der Basisstation 12 ausgerichtet, dass die Signalbereiche 54, 56 symmetrisch bezüglich der Achse 42 (d. h. der vorstehend erwähnten Ebene) ausgerichtet sind und jeweils die Achse 42 schneiden. Längs der Achse 42 sind die Andocksignale daher günstigerweise gleich stark.

Die Andocksignale der IR-Dioden 52 weisen eine unterschiedliche Signalcharakteristik auf. Insbesondere können die Andocksignale unterschiedlich zeitlich moduliert sein. Beispielsweise wird das Andocksignal einer IR-Diode 52 zeitlich moduliert gesendet, etwa in definierter An-Aus-Folge. Das Andocksignal der jeweils anderen IR-Diode wird in andersartiger zeitlicher Modulation gesendet, beispielsweise in unterschiedlicher An-Aus-Folge. Bei Vorhandensein von mehr als zwei Sendeelementen 50 emittieren diese Andocksignale, deren Signalcharakteristik paarweise unterschiedlich ist.

Die Empfangseinrichtung 36 empfängt die Andocksignale, wobei ein Gesamtsignal empfangen wird, das sich aus einer Überlagerung der einzelnen Andocksignale ergibt. Die Steuereinheit 24 kann die Signalbeiträge der unterschiedlichen Andocksignale voneinander unterscheiden. In der Steuereinheit 24 ist zu diesem Zweck die Signalcharakteristik der Andocksignale gespeichert. Die Steuereinheit kann dadurch ermitteln, welcher Signalbeitrag des Gesamtsignales von welcher der IR-Dioden 52 stammt.

Nachfolgend wird unter Verweis insbesondere auf Figur 4 erläutert, wie das Bodenreinigungsgerät zum Laden der Batterie 26 in die Andockstellung verfahren werden kann.

Das Bodenreinigungsgerät 14 bewegt sich auf der Bodenfläche und empfängt mit der Empfangseinrichtung die Andocksignale der IR-Dioden 52. Bevorzugt stoppt das Bodenreinigungsgerät 14 an einer Ist-Position 60. Vorzugsweise ist vorgesehen, dass das Bodenreinigungsgerät 14 an der Ist-Position 60 so relativ zur Basisstation 12 dreht, bis die Signalstärke der Andocksignale maximal ist. Ist dies der Fall, ist das Bodenreinigungsgerät relativ zur Basisstation ausgerichtet, d. h. die Längsrichtung 20 weist auf die Mitte der Basisstation 12.

Anschließend berechnet die Steuereinheit die Ist-Position 60 relativ zur Basisstation 12 unter Einbeziehung der unterschiedlichen Signalcharakteristik der Andocksignale. Dabei wird der Winkel 62 bestimmt, den das Bodenreinigungsgerät 14 mit der Achse 42 einnimmt. Wie bereits vorstehend erwähnt wird die Bezugnahme auf die Achse 42 als Bezugnahme auf die Mittelebene der Basisstation 12.

Außer dem Winkel 62 wird der Abstand 64 des Bodenreinigungsgerätes 14 von der Basisstation 12 berechnet.

Bei der Berechnung des Winkels 62 kann beispielsweise das Verhältnis der Signalstärken der Andocksignale ermittelt werden und/oder das Verhältnis der Signalstärke eines Andocksignals zur Signalstärke des Gesamtsignals. Das jeweilige Verhältnis kann mit einer Verhältnis-Winkel-Beziehung verglichen werden, die in der Steuereinheit 24 gespeichert ist. Bei dieser Beziehung handelt es sich zum Beispiel um eine Kalibrierfunktion oder um eine Kalibrierkurve, wodurch der Winkel 62 bestimmt werden kann.

Der Abstand 64 kann insbesondere ermittelt werden, indem die Signalstärke zumindest eines Andocksignals und/oder die Signalstärke des Gesamtsignals mit einer gespeicherten Signalstärke-Abstands-Beziehung verglichen wird. Die Beziehung kann in der Steuereinheit 24 als Kalibrierfunktion oder Kalibrierkurve gespeichert sein.

Bei der Berechnung des Abstandes 64 kann insbesondere berücksichtigt werden, dass die Signalstärke eines Andocksignals räumlich nicht einheitlich ist. Beispielsweise ist die Signalstärke abhängig von der Winkelstellung des Bodenreinigungsgerätes 14 zu einer jeweiligen IR-Diode 52. Die räumliche Abhängigkeit des Andocksignals kann in der Steuereinheit 24 in einer Signalstärken-Winkelstellung-Beziehung gespeichert sein. Der zuvor errechnete Winkel 62 kann herangezogen werden, um die Signalstärke eines Andocksignals mit der Signalstärken-Winkel-Beziehung zu einer kompensierten Signalstärke zu berechnen, die ihrerseits dem Vergleich mit der Signalstärke-Abstands-Beziehung zugrunde gelegt werden kann. Der Abstand 64 kann dadurch genauer berechnet werden.

Nach Berechnung der Ist-Position 60 kann die Steuereinheit 24 den Fahrweg zunächst zu einem charakteristischen Zielbereich 66 ermitteln. Der Zielbereich 66 befindet sich auf der Achse 42 und wird unabhängig davon angesteuert, wo die Ist-Position 60 ist. Der Zielbereich kann ein eng beschränkter Bereich im Sinne eines Punktes sein. Vorliegend kann der Zielbereich 66 eine räumliche Ausdehnung aufweisen, zum Beispiel einen Radius von ungefähr 5 cm bis 10 cm. Der Zielbereich 66 ist vorliegend ca. 30 cm bis 100 cm von der Basisstation 12 beabstandet, vorzugsweise ungefähr 50 cm bis 70 cm.

Der Zielbereich 66 wird von der Ist-Position 60 in geradliniger Fahrt angefahren. Hierzu wird das Bodenreinigungsgerät 14 an der Ist-Position 60 gedreht, bis die Längsrichtung 20 mit einer gedachten Verbindungslinie 68 der Ist-Position 60 mit dem Zielbereich 66 fluchtet. Die Drehung erfolgt vorzugsweise um den kleineren der Winkel, den die Längsrichtung 20 und die Verbindungslinie 68 einschließen. Je nach Ist-Position 60 ist es dadurch möglich, dass das Bodenreinigungsgerät 14 von der Ist-Position 60 zum Zielbereich 66 in geradliniger Geradeausfahrt oder in geradliniger Rückwärtsfahrt verfährt.

Am Zielbereich 66 richtet sich das Bodenreinigungsgerät 14 zur Basisstation 12 erneut aus. Dies kann unter Analyse der Andocksignale erfolgen. Beispielsweise wird das Bodenreinigungsgerät 14 so gedreht, dass die Signalstärke der Andocksignale maximal ist. Möglich ist es ergänzend oder alternativ auch, dass allein anhand des ermittelten Fahrweges der Motor 22 so angesteuert wird, dass eine korrekte Ausrichtung des Bodenreinigungsgerätes 14 erfolgt.

Ausgehend vom charakteristischen Zielbereich 66 verfährt das Bodenreinigungsgerät 14 idealerweise in geradliniger Geradeausfahrt längs der Andockrichtung 46 in die Andockstellung.

Ausgehend vom Zielbereich 66 wird die Fahrtrichtung des Bodenreinigungsgerätes 14 in die Andockstellung geregelt abhängig von den Andocksignalen. Beispielsweise wird von der Steuereinheit 24 das Verhältnis der Signalstärken der Andocksignale und/oder eines Andocksignals zum Gesamtsignal ausgewertet. Das Ergebnis kann mit in der Steuereinheit gespeicherten Werten verglichen werden. Anhand dieser Werte kann die Steuereinheit 24 überprüfen, ob sich das Bodenreinigungsgerät in der Andockrichtung 26 bewegt. Bei Abweichungen von der vorgesehenen Fahrtrichtung können Korrekturen der Fahrtrichtung vorgenommen werden, bis das Bodenreinigungsgerät 14 schließlich die Basisstation 12 erreicht.

Die Regelung der Fahrtrichtung erfolgt vorzugsweise zyklisch, beispielsweise im Sekunden- oder Millisekundentakt.

Es kann auch vorgesehen sein, dass bei der Regelung der Winkel des Bodenreinigungsgerätes 14 zur Basisstation 12 ermittelt und abhängig vom Ergebnis erforderlichenfalls eine Fahrtrichtungskorrektur vorgenommen wird.

Wenn bei der Bestimmung der Ist-Position 60 allerdings festgestellt wird, dass diese am Zielbereich 66 liegt, kann unter der Regelung der Fahrtrichtung des Bodenreinigungsgerätes 14, wie vorstehend beschrieben, die Basisstation 12 unmittelbar angefahren werden. Eine Ermittlung des Fahrweges von der Ist-Position 60 zum Zielbereich 66 und ein Verfahren dorthin kann eingespart werden.

Das vorstehend beschriebene Verfahren erlaubt es, mit verhältnismäßig geringem apparativen Aufwand und konstruktiv einfacher Ausgestaltung des Bodenreinigungssystems 10 sicherzustellen, dass das Bodenreinigungsgerät 14 zuverlässig in die Andockstellung verfahren werden kann. Aufgrund der konstruktiv einfachen Ausgestaltung kann auch eine kostengünstige Herstellung des Bodenreinigungssystems 10 sichergestellt werden.

Es kann vorgesehen sein, dass die Steuereinheit 24 bei der Berechnung des Winkels 62 zur Bestimmung der Ist-Position 60 überprüft, ob die Genauigkeit der Winkelbestimmung innerhalb eines vorgegebenen oder vorgebbaren Toleranzbereiches liegt. Beispielsweise könnte die Genauigkeit außerhalb des Toleranzbereiches dann liegen, wenn das Bodenreinigungsgerät 14 sich außerhalb eines Signalbereiches 54, 56 befindet. Stellt die Steuereinheit 24 dies fest, wird das Bodenreinigungsgerät 14 etwas verfahren, bis die Signalstärke zumindest eines Andocksignals so erhöht ist, dass die Genauigkeit, den Winkel 62 zu bestimmen, innerhalb des Toleranzbereiches liegt. Dies kann insbesondere durch sukzessives, schrittweises Verfahren des Bodenreinigungsgerätes 14 durchgeführt werden. Wird festgestellt, dass die Genauigkeit der Bestimmung des Winkels 62 groß genug ist, kann die Ist-Position 60 wie vorstehend erläutert bestimmt werden.

In der Steuereinheit 24 kann ferner eine Karte des zu reinigenden Raumes gespeichert sein, anhand derer sich das Bodenreinigungsgerät 14 in dem zu reinigenden Raum lokalisieren kann. Die Position der Basisstation 12 kann in der Karte gespeichert sein. Wird kein Andocksignal empfangen oder nur unzureichend empfangen, kann vorgesehen sein, dass das Bodenreinigungsgerät 14 zunächst anhand der Karte in die Nähe der Basisstation 12 navigiert, bis die Andocksignale empfangen werden können. Das vorstehend erläuterte Verfahren zum Verfahren in die Andockstellung kann anschließend durchgeführt werden.

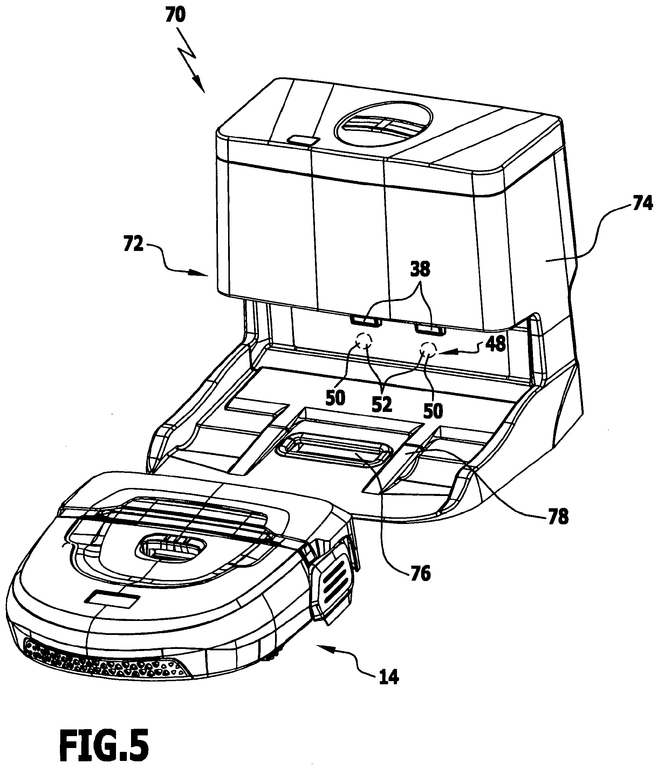

Figur 5 zeigt in perspektivischer Darstellung eine weitere bevorzugte Ausführungsform eines erfindungsgemäßen Bodenbearbeitungssystems zur Durchführung des erfindungsgemäßen Verfahrens, ausgestaltet als Bodenreinigungssystem 70. Das Bodenreinigungssystem 70 umfasst das Bodenreinigungsgerät 14 und eine Basisstation 72. Für gleiche oder gleichwirkende Merkmale der Bodenreinigungssysteme 10 und 70 werden identische Bezugszeichen benutzt. Mit dem Bodenreinigungssystem 70 können die erwähnten Vorteile ebenfalls erzielt werden.

Die Basisstation 72 ist vorliegend eine Ladestation und Absaugstation. In einem Gehäuse 74 der Basisstation 72 ist ein in der Zeichnung nicht dargestelltes Saugaggregat aufgenommen, das einen Saugkanal und dessen Absaugöffnung 76 mit Unterdruck beaufschlagt. In der Andockstellung des Bodenreinigungsgerätes 14 fluchtet eine Schmutzaustrittsöffnung des Schmutzsammelbehälters 34 (nicht gezeigt) mit der Absaugöffnung 76. Ferner koppeln wie bereits erwähnt, die Kontaktelemente 38 mit den Kontaktelementen 28. In der Andockstellung kann dadurch nicht nur die Batterie 26 geladen werden, sondern auch Schmutz aus dem Schmutzsammelbehälter 34 abgesaugt werden.

Die IR-Dioden 52 sind bei der Basisstation 72 unterhalb der Kontaktelemente 38 angeordnet. Dies liegt daran, dass die Kontaktelemente 38 einen größeren Abstand zur Bodenfläche aufweisen, weil das Bodenreinigungsgerät 14 zum Verfahren in die Andockstellung eine Rampe 78 der Basisstation 72 befährt. Die Rampe 78 ist vorgesehen, damit der Saugkanal unterhalb des die Andockstellung einnehmenden Bodenreinigungsgerätes 14 angeordnet ist. Dementsprechend ist die Absaugöffnung 76 in der Rampe 78 gebildet. Die Positionierung der IR-Dioden 52 unterhalb der Kontaktelemente 38 erfolgt, damit die IR-Dioden relativ zur Bodenfläche im Wesentlichen denselben Abstand aufweisen wie die Empfangseinrichtung 36.

Im Übrigen erfolgt das Andocken des Bodenreinigungsgerätes 14 an der Basisstation 72 wie beim Bodenreinigungssystem 10. Zur Vermeidung von Wiederholungen kann auf voranstehende Erläuterungen verwiesen werden.

## Patentansprüche

1. Verfahren zum Andocken eines selbstfahrenden und selbstlenkenden Bodenbearbeitungsgerätes an einer Basisstation, wobei mit zwei oder mehr Sendeelementen der Basisstation ein jeweiliges, in einem jeweiligen Signalbereich räumlich ausgedehntes Andocksignal ausgesendet wird, wobei die Signalbereiche abschnittsweise überlappen und die Andocksignale unterschiedliche Signalcharakteristik aufweisen, und wobei die Andocksignale von einer Empfangseinrichtung des Bodenbearbeitungsgerätes empfangen und von einer Steuereinheit des Bodenbearbeitungsgerätes analysiert werden, **dadurch gekennzeichnet, dass** mit der Steuereinheit die Ist-Position des Bodenbearbeitungsgerätes relativ zur Basisstation unter Einbeziehung der unterschiedlichen Signalcharakteristik berechnet wird, ein Fahrweg des Bodenbearbeitungsgerätes von der Ist-Position zu einem charakteristischen Zielbereich in vorgegebener oder vorgebbarer Relativposition zur Basisstation ermittelt und das Bodenbearbeitungsgerät zu dem charakteristischen Zielbereich verfahren wird, ausgehend von dem das Bodenbearbeitungsgerät in eine Andockstellung an der Basisstation verfahren wird.

2. Bodenbearbeitungssystem zur Durchführung des Verfahrens nach Anspruch 1, umfassend eine Basisstation (12; 72), die eine Sendeeinrichtung (48) mit zwei oder mehr Sendeelementen (50) aufweist, von denen ein jeweiliges, in einem jeweiligen Signalbereich (54, 56) räumlich ausgedehntes Andocksignal aussendbar ist, wobei die Signalbereiche (54, 56) abschnittsweise überlappen und die Andocksignale unterschiedliche Signalcharakteristik aufweisen, sowie umfassend ein selbstfahrendes und selbstlenkendes Bodenbearbeitungsgerät (14), das eine Empfangseinrichtung (36) zum Empfangen der Andocksignale und eine Steuereinheit (24) zum Analysieren der Andocksignale aufweist, **dadurch gekennzeichnet, dass** mit der Steuereinheit (24) die Ist-Position (60) des Bodenbearbeitungsgerätes (14) relativ zur Basisstation (12; 72) unter Einbeziehung der unterschiedlichen Signalcharakteristik berechenbar ist, ein Fahrweg des Bodenbearbeitungsgerätes (14) von der Ist-Position (60) zu einem charakteristischen Zielbereich (66) in vorgegebener oder vorgebbarer Relativposition zur Basisstation (12; 72) ermittelbar und das Bodenbearbeitungsgerät (74) zu dem charakteristischen Zielbereich (66) verfahrbar ist, ausgehend von dem das Bodenbearbeitungsgerät (14) in eine Andockstellung an der Basisstation (12; 72) verfahrbar ist.

3. Bodenbearbeitungssystem nach Anspruch 2, **dadurch gekennzeichnet, dass** die Sendeelemente (50) Leuchtdioden sind, insbesondere Infrarot-Dioden (52).

4. Bodenbearbeitungssystem nach Anspruch 2 oder 3, **dadurch gekennzeichnet, dass** die Andocksignale sich in der verwendeten Wellenlänge unterscheiden und/oder in unterschiedlicher zeitlicher Modulation aussendbar sind.

5. Bodenbearbeitungssystem nach einem der Ansprüche 2 bis 4, **dadurch gekennzeichnet, dass** zur Bestimmung der Ist-Position (60) des Bodenbearbeitungsgerätes (14) relativ zur Basisstation (12; 72) der Abstand (64) bestimmbar ist, den das Bodenbearbeitungsgerät (14) zur Basisstation (12; 72) aufweist, sowie der Winkel (62), den das Bodenbearbeitungsgerät (14) zur Basisstation (12; 14) einnimmt, wobei der Winkel (62) insbesondere zwischen einer gedachten Verbindungslinie der Basisstation (12; 72) mit dem Bodenbearbeitungsgerät (14) und einer Achse (42) der Basisstation (12; 72) gemessen ist, längs der das Bodenbearbeitungsgerät (14) in definierter Andockrichtung (46) in die Andockstellung verfahrbar ist.

6. Bodenbearbeitungssystem nach Anspruch 5, **dadurch gekennzeichnet, dass** das Bodenbearbeitungsgerät (14) vor der Bestimmung der Ist-Position (60) an dieser relativ zur Basisstation (12; 72) so drehbar ist, dass die Signalstärke des Gesamtsignals aus den zwei oder mehr Andocksignalen maximal ist.

7. Bodenbearbeitungssystem nach Anspruch 5 oder 6, **dadurch gekennzeichnet, dass** mit der Steuereinheit (24) überprüfbar ist, ob die Genauigkeit, mit der der Winkel (62) bestimmbar ist, außerhalb eines Toleranzbereiches liegt, dass bejahendenfalls das Bodenbearbeitungsgerät (14) so bewegbar ist, dass die Signalstärke zumindest eines Andocksignals so erhöht ist, dass eine Genauigkeit der Bestimmung des Winkels (62) innerhalb des Toleranzbereiches möglich ist, bevor die Ist-Position (60) bestimmt wird.

8. Bodenbearbeitungssystem nach einem der Ansprüche 5 bis 7, **dadurch gekennzeichnet, dass** der Winkel (62) des Bodenbearbeitungsgerätes (14) zur Basisstation (12; 72) ermittelbar ist, indem das Verhältnis der Signalstärken von zwei oder mehr Andocksignalen miteinander und/oder das Verhältnis der Signalstärke eines Andocksignals zur Signalstärke des Gesamtsignals aus den zwei oder mehr Andocksignalen berechnet und von der Steuereinheit (24) anhand einer gespeicherten Verhältnis-Winkel-Beziehung ermittelt wird.

9. Bodenbearbeitungssystem nach einem der Ansprüche 5 bis 8, **dadurch gekennzeichnet, dass** der Abstand (64) des Bodenbearbeitungsgerätes (14) zur Basisstation (12; 72) ermittelbar ist, indem die Signalstärke zumindest eines Andocksignals und/oder die Signalstärke des Gesamtsignals aus den zwei oder mehr Andocksignalen durch Vergleich mit einer gespeicherten Signalstärke-Abstands-Beziehung ermittelt wird.

10. Bodenbearbeitungssystem nach Anspruch 9, **dadurch gekennzeichnet, dass** hierbei berücksichtigbar ist, dass die Signalstärke eines Andocksignals im jeweiligen Signalbereich abhängig von der Winkelstellung ist, die das Bodenbearbeitungsgerät (14) relativ zum Sendeelement (50) einnimmt, und dass der vom Bodenbearbeitungsgerät (14) zur Basisstation (12; 72) eingenommene Winkel (62) heranziehbar ist, mit einer Signalstärken-Winkelstellung-Beziehung eine kompensierte Signalstärke zu berechnen, die dem Vergleich mit der Signalstärke-Abstands-Beziehung zugrundegelegt wird.

11. Bodenbearbeitungssystem nach einem der Ansprüche 2 bis 10, **dadurch gekennzeichnet, dass** die Fahrtrichtung des Bodenbearbeitungsgerätes (14) von Zielbereich (66) in die Andockstellung abhängig von den Signalstärken der Andocksignale regelbar ist, vorzugsweise dass dies auch durchführbar ist, wenn die Ist-Position (60) am Zielbereich (66) liegt, in welchem Fall direkt von der Ist-Position in die Andockstellung verfahrbar ist.

12. Bodenbearbeitungssystem nach einem der Ansprüche 2 bis 11, **dadurch gekennzeichnet, dass** zumindest eines der Folgenden gilt:
- der Zielbereich (66) ist so relativ zur Basisstation (12; 72) positioniert, dass das Bodenbearbeitungsgerät (14) ausgehend vom Zielbereich (66) in geradliniger Geradeausfahrt in die Andockstellung verfahrbar ist;
- der Zielbereich (66) liegt auf einer von der Basisstation (12) definierten Achse (42), und die Andockrichtung (46) verläuft längs der Achse (42).

13. Bodenbearbeitungssystem nach einem der Ansprüche 2 bis 12, **dadurch gekennzeichnet, dass** unabhängig von der Ist-Position (60) des Bodenbearbeitungsgerätes (14) derselbe Zielbereich (66) wählbar und anfahrbar ist.

14. Bodenbearbeitungssystem nach Anspruch 12 oder 13, **dadurch gekennzeichnet, dass** die zwei oder mehr Sendeelemente (50) und die von ihnen erfassten Signalbereiche (54, 56) bezüglich der Achse (42) symmetrisch zueinander an der Basisstation (12; 72) positioniert bzw. ausgerichtet sind und/oder dass die von zumindest zwei Sendeelementen (50) erfassten Signalbereiche (54, 56) die Achse (42) schneiden.

15. Bodenbearbeitungssystem nach einem der Ansprüche 2 bis 14, **dadurch gekennzeichnet, dass** das Bodenbearbeitungsgerät (14) ein Bodenreinigungsgerät (14) ist und/oder dass die Basisstation (12; 72) eine Ladestation und/oder Absaugstation und/oder Nachfüllstation ist.

## Claims

1. A method for docking a self-propelling and self-steering floor treatment appliance to a base station, wherein a respective spatially extended docking signal is emitted by means of each of two or more emitting elements of the base station in a respective signal region, wherein the signal regions partially overlap and the docking signals have a different signal characteristic and wherein the docking signals are received by a receiving apparatus of the floor treatment appliance and are analyzed by a control unit of the floor treatment appliance, **characterized in that** with the control unit, the current position of the floor treatment appliance relative to the base station is calculated taking account of the different signal characteristic, a travel route of the floor treatment appliance from the current position to a characteristic target region in a pre-determined or pre-determinable relative position to the base station is determined and the floor treatment appliance is moved to the characteristic target region, starting from which the floor treatment appliance is moved into a docking position at the base station.

2. A floor treatment system for carrying out the method in accordance with claim 1, comprising a base station (12; 72) which has an emitting apparatus (48) with two or more emitting elements (50), by each of which a respective spatially extended docking signal is emittable in a respective signal region (54, 56), wherein the signal regions (54, 56) partially overlap and the docking signals have a different signal characteristic, also comprising a self-propelling and self-steering floor treatment appliance (14) which has a receiving apparatus (36) for receiving the docking signals and a control unit (24) for analyzing the docking signals, **characterized in that** with the control unit (24), the current position (60) of the floor treatment appliance (14) relative to the base station (12; 72) is calculable taking account of the different signal characteristic, a travel route of the floor treatment appliance (14) from the current position (60) to a characteristic target region (66) in a pre-determined or pre-determinable relative position to the base station (12; 72) is determinable and the floor treatment appliance (74) is movable to the characteristic target region (66), starting from which the floor treatment appliance (14) is movable into a docking position at the base station (12; 72).

3. The floor treatment system in accordance with claim 2, **characterized in that** the emitting elements (50) are light-emitting diodes, in particular infrared diodes (52).

4. The floor treatment system in accordance with claim 2 or 3, **characterized in that** the docking signals differ in the wavelength used and/or are emittable in different temporal modulation.

5. The floor treatment system in accordance with one of the claims 2 to 4, **characterized in that** for determining the current position (60) of the floor treatment appliance (14) relative to the base station (12; 72), the distance (64) that the floor treatment appliance (14) has from the base station (12; 72) is determinable, as well as the angle (62) that the floor treatment appliance (14) assumes relative to the base station (12; 14), wherein there is measured the angle (62), in particular, between an imaginary connecting line from the base station (12; 72) to the floor treatment appliance (14) and an axis (42) of the base station (12; 72), along which the floor treatment appliance (14) is movable in a defined docking direction (46) into the docking position.

6. The floor treatment system in accordance with claim 5, **characterized in that** before the determination of the current position (60), the floor treatment appliance (14) is rotatable at this position relative to the base station (12; 72) so that the signal strength of the overall signal from the two or more docking signals is a maximum.

7. The floor treatment system in accordance with claim 5 or 6, **characterized in that** it is checkable by the control unit (24) whether the accuracy with which the angle (62) is determinable lies outside a tolerance range, **in that** if so, the floor treatment appliance (14) is movable so that the signal strength of at least one docking signal is increased so that an accuracy of the determination of the angle (62) within the tolerance range is possible before the current position (60) is determined.

8. The floor treatment system in accordance with one of the claims 5 to 7, **characterized in that** the angle (62) of the floor treatment appliance (14) relative to the base station (12; 72) is determinable **in that** the ratio of the signal strengths from two or more docking signals to one another and/or the ratio of the signal strength of one docking signal to the signal strength of the overall signal from the two or more docking signals is calculated, and is determined by the control unit (24) on the basis of a stored ratio-angle relationship.

9. The floor treatment system in accordance with one of the claims 5 to 8, **characterized in that** the distance (64) of the floor treatment appliance (14) from the base station (12; 72) is determinable **in that** the signal strength of at least one docking signal and/or the signal strength of the overall signal from the two or more docking signals is determined by comparison with a stored signal strength-distance relationship.

10. The floor treatment system in accordance with claim 9, **characterized in that** herein account can be taken thereof that the signal strength of a docking signal in the respective signal region is dependent on the angular position that the floor treatment appliance (14) assumes relative to the emitting element (50) and **in that** the angle (62) assumed by the floor treatment appliance (14) relative to the base station (12; 72) can be taken into account, to calculate, with a signal strength-angular position relationship a compensated signal strength which underlies the comparison with the signal strength-distance relationship.

11. The floor treatment system in accordance with one of the claims 2 to 10, **characterized in that** the travel direction of the floor treatment appliance (14) from the target region (66) into the docking position is controllable dependent upon the signal strengths of the docking signals, preferably that this can also be carried out if the current position (60) lies at the target region (66), in which case movement is possible directly from the current position into the docking position.

12. The floor treatment system in accordance with one of the claims 2 to 11, **characterized in that** at least one of the following applies:
- the target region (66) is positioned relative to the base station (12; 72) so that the floor treatment appliance (14) is movable starting from the target region (66) in straight forward travel into the docking position;
- the target region (66) lies on an axis (42) defined by the base station (12) and **in that** the docking direction (46) extends along the axis (42).

13. The floor treatment system in accordance with one of the claims 2 to 12, **characterized in that** the same target region (66) is selectable and approachable regardless of the current position (60) of the floor treatment appliance (14).

14. The floor treatment system in accordance with claim 12 or 13, **characterized in that** the two or more emitting elements (50) and the signal regions (54, 56) covered by them are positioned and oriented, respectively, at the base station (12; 72) symmetrically to one another relative to the axis (42) and/or **in that** the signal regions (54, 56) covered by at least two emitting elements (50) intersect the axis (42).

15. The floor treatment system in accordance with one of the claims 2 to 14, **characterized in that** the floor treatment appliance (14) is a floor cleaning appliance (14) and/or **in that** the base station (12; 72) is a charging station and/or a suction station and/or a refilling station.

## Revendications

1. Procédé pour l'arrimage d'un appareil de traitement de sol, automoteur et autoguidé, à une station de base, procédé
d'après lequel à l'aide de deux éléments émetteurs ou davantage de la station de base, on émet un signal d'arrimage respectif propagé spatialement dans une zone de signal respective,
d'après lequel les zones de signal se chevauchent partiellement et les signaux d'arrimage présentent une caractéristique de signal différente, et
d'après lequel les signaux d'arrimage sont reçus par un dispositif récepteur de l'appareil de traitement de sol et analysés par une unité de commande de l'appareil de traitement de sol,
**caractérisé en ce qu'**à l'aide de l'unité de commande, on calcule la position réelle de l'appareil de traitement de sol par rapport à la station de base en prenant en considération la caractéristique de signal différente, on détermine un parcours de déplacement de l'appareil de traitement de sol de la position réelle vers une zone-cible caractéristique située dans une position relative prédéterminée ou pouvant être prédéterminée par rapport à la station de base, et l'appareil de traitement de sol est déplacé jusqu'à la zone-cible caractéristique, à partir de laquelle l'appareil de traitement de sol va être déplacé jusqu'à une position d'arrimage dans la station de base.

2. Système de traitement de sol pour la mise en œuvre du procédé selon la revendication 1, comprenant une station de base (12; 72), qui présente un dispositif émetteur (48) avec deux éléments émetteurs (50) ou davantage, qui sont en mesure d'émettre un signal d'arrimage respectif propagé spatialement dans une zone de signal (54, 56) respective, les zones de signal (54, 56) se chevauchant partiellement et les signaux d'arrimage présentant une caractéristique de signal différente, le système comprenant également un appareil de traitement de sol (14) automoteur et autoguidé, qui comporte un dispositif récepteur (36) pour assurer la réception des signaux d'arrimage, et une unité de commande (24) pour analyser les signaux d'arrimage, **caractérisé en ce qu'**à l'aide de l'unité de commande (24), il est possible de calculer la position réelle (60) de l'appareil de traitement de sol (14) par rapport à la station de base (12; 72) en prenant en considération la caractéristique de signal différente, il est possible de déterminer un parcours de déplacement de l'appareil de traitement de sol (14) de la position réelle (60) vers une zone-cible (66) caractéristique située dans une position relative prédéterminée ou pouvant être prédéterminée par rapport à la station de base (12; 72), et l'appareil de traitement de sol (14) peut être déplacé jusqu'à la zone-cible (66) caractéristique, à partir de laquelle l'appareil de traitement de sol (14) pourra être déplacé jusqu'à une position d'arrimage à la station de base (12; 72).

3. Système de traitement de sol selon la revendication 2, **caractérisé en ce que** les éléments émetteurs (50) sont des diodes électroluminescentes, notamment des diodes à infrarouge (52).

4. Système de traitement de sol selon la revendication 2 ou la revendication 3, **caractérisé en ce que** les signaux d'arrimage se distinguent dans la longueur d'onde utilisée, et/ou peuvent être émis selon une modulation temporelle différente.

5. Système de traitement de sol selon l'une des revendications 2 à 4, **caractérisé en ce que** pour la détermination de la position réelle (60) de l'appareil de traitement de sol (14) par rapport à la station de base (12; 72), il est possible de déterminer la distance d'éloignement (64) que présente l'appareil de traitement de sol (14) à la station de base (12; 72), ainsi que l'angle (62) que prend l'appareil de traitement de sol (14) par rapport à la station de base (12; 72), l'angle (62) étant mesuré notamment entre une ligne de liaison fictive de la station de base (12; 72) avec l'appareil de traitement de sol (14), et un axe (42) de la station de base (12; 72), le long duquel l'appareil de traitement de sol (14) peut être déplacé dans la position d'arrimage selon une direction d'arrimage (46) définie.

6. Système de traitement de sol selon la revendication 5, **caractérisé en ce que** l'appareil de traitement de sol (14) peut, avant la détermination de la position réelle (60), être tourné au niveau de celle-ci, par rapport à la station de base (12; 72), de manière telle, que l'intensité de signal du signal global constitué des deux signaux d'arrimage ou d'avantage, soit maximale.

7. Système de traitement de sol selon la revendication 5 ou la revendication 6, **caractérisé en ce qu'**à l'aide de l'unité de commande (24), il est possible de vérifier si la précision avec laquelle peut être déterminée l'angle (62), se situe en-dehors d'une plage de tolérance, et **en ce que** dans le cas d'une réponse positive, l'appareil de traitement de sol (14) peut être déplacé de manière telle, que l'intensité de signal d'au moins un signal d'arrimage soit augmentée de façon à permettre une précision de la détermination de l'angle (62) à l'intérieur de la plage de tolérance, avant la détermination de la position réelle (60).

8. Système de traitement de sol selon l'une des revendications 5 à 7, **caractérisé en ce que** l'angle (62) de l'appareil de traitement de sol (14) relativement à la station de base (12; 72) peut être déterminé en calculant le rapport des intensités de signal de deux signaux d'arrimage ou davantage les uns relativement aux autres et/ou le rapport de l'intensité de signal d'un signal d'arrimage à l'intensité de signal du signal global constitué des deux signaux d'arrimage ou davantage, et en déterminant l'angle à l'aide de l'unité de commande (24) au regard d'une relation angle-rapport, mémorisée.

9. Système de traitement de sol selon l'une des revendications 5 à 8, **caractérisé en ce que** la distance d'éloignement (64) de l'appareil de traitement de sol (14) à la station de base (12; 72) peut être déterminée en déterminant celle-ci par comparaison de l'intensité de signal d'au moins un signal d'arrimage et/ou l'intensité de signal du signal global constitué des deux signaux d'arrimage ou davantage, avec une relation intensité de signal-distance d'éloignement.

10. Système de traitement de sol selon la revendication 9, **caractérisé en ce que** l'on tient compte du fait que l'intensité de signal d'un signal d'arrimage dans la zone de signal respective dépend de la position angulaire que prend l'appareil de traitement de sol (14) relativement à l'élément émetteur (50), et **en ce que** l'angle (62) formé entre l'appareil de traitement de sol (14) et la station de base (12; 72) peut être mis à profit pour calculer, avec une relation intensité de signal-position angulaire, une intensité de signal compensée, qui sert de base à la comparaison avec la relation intensité de signal-distance d'éloignement.

11. Système de traitement de sol selon l'une des revendications 2 à 10, **caractérisé en ce que** la direction de marche de l'appareil de traitement de sol (14) de la zone-cible (66) à la position d'arrimage, peut être régulée en fonction des intensités de signal des signaux d'arrimage, de préférence **en ce que** cela peut également être effectué lorsque la position réelle (60) se situe au niveau de la zone-cible (66), auquel cas le déplacement peut s'effectuer directement de la position réelle à la position d'arrimage.

12. Système de traitement de sol selon l'une des revendications 2 à 11, **caractérisé en ce que** l'une au moins des propriétés suivantes est vérifiée :
- la zone-cible (66) est positionnée par rapport à la station de base (12; 72) de manière telle, que l'appareil de traitement de sol (14) puisse se déplacer, à partir de la zone-cible (66), selon un parcours de marche rectiligne jusqu'à la position d'arrimage ;
- la zone-cible (66) se situe sur un axe (42) défini par la station de base (12; 72), et la direction d'arrimage (46) s'étend le long de l'axe (42).

13. Système de traitement de sol selon l'une des revendications 2 à 12, **caractérisé en ce qu'**il est possible, indépendamment de la position réelle (60) de l'appareil de traitement de sol (14), de sélectionner et d'accoster la même zone-cible (66).

14. Système de traitement de sol selon la revendication 12 ou la revendication 13, **caractérisé en ce que** lesdits deux éléments émetteurs (50) ou davantage et les zones de signal (54, 56) qu'ils couvrent, sont positionnés et/ou orientés symétriquement par rapport à l'axe (42) au niveau de la station de base (12; 72), et/ou **en ce que** les zones de signal (54, 56) couvertes par au moins deux éléments émetteurs (50) coupent l'axe (42).

15. Système de traitement de sol selon l'une des revendications 2 à 14, **caractérisé en ce que** l'appareil de traitement de sol (14) est un appareil de nettoyage de sol (14), et/ou **en ce que** la station de base (12; 72) est une station de charge et/ou une station d'aspiration et/ou une station de remplissage.
